# EUROPÄISCHE PATENTSCHRIFT

(11) **EP 0 591 852 B1**
(45) Veröffentlichungstag und Bekanntmachung des Hinweises auf die Patenterteilung: **08.12.1999**
(21) Anmeldenummer: 93115842.2
(22) Anmeldetag: 30.09.1993
(51) Int. Cl.: A61K 31/195, A23L 3/3427

(54) **Produkt mit vermindertem H2S-Gehalt und Verfahren zu dessen Herstellung**
Product with reduced H2S-content and method for its production
Produit à teneur réduite en H2S et procédé de sa production

(30) Priorität: 07.10.1992 DE 4233817
(43) Veröffentlichungstag der Anmeldung: 13.04.1994
(73) Patentinhaber: Pharmacia & Upjohn GmbH, 91058 Erlangen (DE)
(72) Erfinder: Harand, Ralf, D-90766 Fürth (DE); Gärtner, Hans, D-91338 Igensdorf (DE); Iwatschenko, Peter, D-91077 Neunkirchen/Brand (DE); Voss, Carl-Jürgen, D-90453 Nürnberg (DE)
(74) Vertreter: Luderschmidt, Schüler & Partner GbR

(56) Entgegenhaltungen:
- EP-A- 0 229 380
- EP-A- 0 340 662
- EP-A- 0 366 254
- DE-B- 2 658 237
- GB-A- 2 213 038
- US-A- 4 908 151

## Beschreibung

Die Erfindung betrifft Produkte mit vermindertem H₂S-Gehalt. Insbesondere betrifft die Erfindung ein Produkt in einem Behälter, wobei das Produkt H₂S freisetzt und/oder enthält. Weiterhin betrifft die Erfindung ein Verfahren zur Verminderung des H₂S-Gehalts des Produktes.

Unter Produkt im Sinne der Erfindung werden Feststoffe, Pasten, Lösungen, Mischungen und dergleichen, insbesondere Pharmaka und Lebensmittel verstanden.

Im Stand der Technik sind Produkte bekannt, die als Abbauprodukt Schwefelwasserstoff bilden. Schwefelwasserstoff ist sehr toxisch und übelriechend. Schwefelwasserstoff (H₂S) bildet sich insbesondere in Lösungen, die schwefelhaltige Aminosäuren enthalten. Solcherlei Lösungen enthalten beispielsweise Acetylcystein oder Cystein. Insbesondere bei Infusions- und Nährlösungen ist eine Erhitzung zwecks Sterilisation unumgänglich. Die thermische Labilität dieser Aminosäuren führt bei Erhitzung dann unweigerlich zu einem Abbau und damit zur Bildung von Schwefelwasserstoff.

Es ist bis heute kein Verfahren bzw. kein Produkt bekannt, das die Schwefelwasserstoffbildung vermeidet, bzw. die damit verbundenen Nachteile behebt.

Im Stand der Technik hat man folglich im Fall H₂S freisetzender oder enthaltender Lösungen die H₂S-Bildung regelmäßig in Kauf genommen, um einen wirksamen Schutz anderer Substanzen vor einer Oxidation durch Sauerstoff zu gewährleisten. Insbesondere zur Herstellung von sterilisierten Acetylcystein- und cysteinhaltigen Pharmaka und Lebensmittel besteht das Bedürfnis nach einer Verminderung des H₂S-Gehaltes.

Der vorliegenden Erfindung liegt somit das Problem zugrunde, ein Produkt, insbesondere eine aminosäurenhaltige Infusions- oder Nährlösung, in der sich H₂S bilden kann oder bereits gebildet hat, in einem verschlossenen Behälter bereitzustellen, wobei das Produkt von H₂S weitgehend befreit ist bzw. wird.

Dieses Problem wird im wesentlichen dadurch gelöst, daß das H₂S freisetzende oder enthaltende Produkt in einen gasdurchlässigen Behälter eingebracht wird, in dessen unmittelbarer Umgebung ein H₂S-Absorber angeordnet wird, wobei der gasdurchlässiger Behälter sowie der H₂S-Absorber sich in einem weitgehend gasundurchlässigen Behälter befinden.

Die erfindung betrifft einen Behälter mit einem darin befindlichen Produkt, wobei (A) das Produkt H₂S freisetzt bzw. enthält und (B) der Behälter für Gase durchlässig ist, dadurch gekennzeichnet, daß um den Behälter herum ein weiterer, weitgehend gasundurchlässiger Behälter mit einem darin enthaltenen H₂S-Absorber angeordnet ist. Dieser weitere, weitgehend gasundurchlässige Behälter dient vorteilhaft als Schutz gegen eindringenden Sauerstoff.

Gasdurchlässig bedeutet hier auch, daß der Behälter gegebenenfalls nur bei den äußeren Bedingungen, unter denen es zu einer Freisetzung von H₂S aus dem Produkt kommt, für H₂S durchlässig ist.

Der weitgehend gasundurchlässige Behälter kann auch aus einem Material bestehen, das nur unter den gewöhnlichen Lagerbedingungen bei Raumtemperatur kein oder nur geringe Mengen Gas wie H₂S durchläßt.

Bei dem H₂S-Absorber handelt es sich vorzugsweise um feingemahlenes Eisen. Die zuvor genannten Produkte können Aminosäuren enthalten. Von besonderem Interesse sind Aminosäurelösungen, die Tryptophan enthalten. Bevorzugte Substanzen, die in den erfindungsgemäßen Lösungen als Oxidationsschutz wirken können, enthalten Cystein, N-Acetylcystein, N,N'-Diacetylcystein oder cystinhaltige oder sonstige homologe schwefelhaltige Aminosäuren. Diese Verbindungen setzen in der Wärme leicht H₂S frei.

Durch die Erfindung wird erstmalig ein Produkt bereitgestellt, bei dem die Probleme mit toxischem H₂S beherrscht werden können. Insbesondere ist es nun möglich, sterilisierte Acetylcystein und Cystein-haltige Pharmaka und Lebensmittel herzustellen, die nicht mehr wegen ihres unangenehmen Geruchs vom Verbraucher abgelehnt werden. Bei erfindungsgemäßen Lösungen sind zudem kaum schwerlösliche Ausfällungen mit Spurenelementen zu beobachten.

Jedenfalls ermöglicht die Erfindung eine längere Lagerung H₂S-Gas entwickelnder bzw. enthaltender Produkte.

Insbesondere befriedigt die Erfindung somit auch das Bedürfnis nach einem gegen Oxidation geschützten Produkt, das einfach herzustellen ist und die erforderliche Lagerstabilität aufweist.

Die Erfindung läßt sich nun in einfacher Weise dadurch umsetzen, daß Produkte, die H₂S enthalten oder freisetzen, in einen Behälter aus Kunststoff eingebracht werden, der insbesondere für H₂S durchlässig ist. Das sich nun beispielsweise bei einer Hitzesterilisation oder Hitzebehandlung bildende Schwefelwasserstoffgas diffundiert dann leicht durch das Kunststoffmaterial des Behälters hindurch und wird am Absorber absorbiert. Als Schwefelwasserstoffabsorber können prinzipiell alle leicht Sulfide bildende Stoffe, insbesondere Metall und Metallsalze, gegebenenfalls auf geeignete Träger aufgebracht, zum Einsatz gelangen.

Der Absorber in dem Zwischenraum zwischen dem äußeren Behälter und dem inneren Behälter sorgt nun dafür, daß dort die Schwefelwasserstoffkonzentration besonders klein ist. Das hat wiederum zur Folge, daß das die Diffusion antreibende Schwefelwasserstoffkonzentrationsgefälle zwischen dem inneren Behälter und dem äußeren Behälter fast maximal ist. Das bedeutet, daß der Schwefelwasserstoff mit einer großen Diffusionsgeschwindigkeit aus dem inneren Behälter in den Zwischenraum diffundiert. Praktisch hat das zur Konsequenz, daß Infusionslösungen, die schwefelhaltige Aminosäuren enthalten und in Kunststoffbeuteln abgefüllt sind, schon nach wenigen Tagen nur noch sehr niedrige H₂S-Konzentrationen in der Lösung und somit keinen unangenehmen Geruch aufweisen, also verkaufs- und anwendungsfähig sind. Insbesondere für den Fall, daß die wässrige Lösung in einen inneren gasdurchlässigen Behälter abgefüllt, aber zugleich mit einem weiteren, weitgehend gasundurchlässigen, beispielsweise Kunststoffmaterial umgeben wird, sorgt der H₂S-Absorber dafür, daß beim Öffnen des äußeren Behälters eine deutliche Geruchsbelästigung in Folge einer H₂S-Bildung vermieden wird.

Ein bevorzugter Schwefelwasserstoffabsorber besteht aus feingemahlenem Eisenpulver. Prinzipiell ist aber jeglicher Schwefelwasserstoffabsorber denkbar. Beispielsweise:

Arsen, Antimon, Zinn, Quecksilber, Wismut, Kupfer, Cadmium, Nickel, Cobalt, Mangan, Zink, Aluminium und deren Salze oder andere Verbindungen.

Der Absorber kann beispielsweise in durchlässige Behältnisse (zum Beispiel Beutelchen aus Kunststoffen oder Papier) als feines Pulver abgefüllt, oder auf einen Träger, zum Beispiel Papierstreifen, aufgebracht werden. Daneben ist es auch denkbar, den inneren Behälter (mit der wässrigen Lösung) nahezu vollständig mit dem Absorber zu umgeben und gegebenenfalls mit einer weitgehend gasundurchlässigen äußeren Beschichtung zu versehen; bzw. das Ganze als unabhängigen Behälter zu gestalten.

Besonders vorteilhaft ist es, wenn der H₂S-Absorber zugleich als Sauerstoffabsorber wirken kann. In diesem Fall kann wirkungsvoll zusätzlich noch die Diffusion von Sauerstoff in die Lösung beschränkt werden. Dies hat ganz besondere Vorteile, wenn ein weiterer, weitgehend gasundurchlässiger Behälter um den inneren Behälter und den H₂S-Absorber herum vorgesehen wird. In diesem Fall absorbiert der H₂S-Absorber sowohl H₂S als auch Sauerstoff. Auf diese Weise wird wirksam eine Langzeitstabilität der erfindungsgemäßen Lösungen gewährleistet.

Ein besonderer Vorteil der Erfindung besteht somit darin, über die Verwendung eines Schwefelwasserstoffabsorbers, vor allem cysteinhaltige Infusionslösungen, bereitzustellen, die terminal sterilisiert in einem Kunststoffbeutel mit gasdichtem Umbeutel in einer der parenteralen Anwendung angemessenen Qualität hergestellt werden können. Hierbei tritt nämlich kein Schwefelwasserstoffgeruch beim Öffnen des Umbeutels mehr auf. Beim Zudosieren von Spurenelementen, die schwerlösliche Sulfide bilden, treten weiterhin keine Ausfällungen mehr auf.

Gegenstand der Erfindung ist weiterhin ein Verfahren zur Herstellung eines gegen Oxidation geschützten Produktes, bei dem zunächst zu einem Produkt, das gegen eine Oxidation durch Sauerstoff geschützt werden soll, ein Stoff in einer Menge zugegeben wird, die unter den Verfahrens- und nachfolgenden Gebrauchsbedingungen einen ausreichenden Schutz gegen Oxidation gewährleisten würde, wobei der Stoff und/oder dessen Oxidationsprodukt/e H₂S freisetzen können, dann wird das Produkt zusammen mit dem Stoff in einen für Gase durchlässigen Behälter abgefüllt und schließlich der verschlossene Behälter mit einem weiteren gasundurchlässigen Behälter umgeben, in dem ein H₂S-Absorber angeordnet ist, wobei in dem Verfahren gegebenenfalls eine Hitzesterilisation durchgeführt wird.

Stoffe, die im Sinne des erfindungsgemäßen Gegenstandes unter den Verfahrens- und nachfolgenden Gebrauchsbedingungen einen ausreichenden Schutz gewährleisten würden, sind insbesondere die zuvor erwähnten Aminosäuren, Acetylcystein und Cystein. Weiterhin kommen zu dem angegebenen Zweck Sulfite in Frage. Ausreichender Schutz bedeutet in diesem Zusammenhang, daß die Menge ausreicht, um bei den unter normalen Umständen zu erwartenden thermischen und sonstigen Einflüssen bei der Herstellung und späteren Lagerung den für die Brauchbarkeit des Produktes erforderlichen Schutz zu gewährleisten. Diese Mengen können von einem Fachmann ohne Weiteres in einfachen Versuchen festgestellt werden. Jedenfalls umfassen Stoffe im Sinne der Erfindung jene, die selber und/oder dessen Oxidationsprodukte H₂S freisetzen. Diese Freisetzung kann sowohl bei normaler Raumtemperatur als auch erst in der Wärme erfolgen, insbesondere unter den Bedingungen einer Sterilisation. Die Menge des Absorbers, die in dem weiteren, gasundurchlässigen Behälter eingeschlossen ist, sollte ausreichend sein, um das freigesetzte H₂S, das durch den inneren Behälter in den Zwischenraum zwischen den Behältern hineindiffundiert zu absorbieren. Diese Mengen können von einem Fachmann ohne Weiteres mittels einfacher Versuche bestimmt werden.

Auch die Ausmaße der Behälter sind für die Erfindung an sich nicht kritisch. Jedenfalls sollte der äußere Behälter groß genug sein, um den inneren Behälter mit dem Absorber aufnehmen zu können. Das eingeschlossene Volumina sollte aber nicht mehr als das zweifache des Volumens in dem inneren Behälter ausmachen.

Die Erfindung wird in den folgenden Beispielen näher erläutert.

### Beispiel 1

In diesem Beispiel sollte geklärt werden, in wie weit handelsübliche Sauerstoffabsorber bei der Erfindung zum Einsatz gelangen können.

Es wurden je 50 ml einer wässrigen 0,09 mol/l Na₂S-Lösung und 10 ml konzentrierter HCl in Beutel aus einer gasdurchlässigen Folie eingefüllt. Die Mengen wurden so gewählt, daß eine der garantierten Mindestsauerstoffaufnahmekapazität eines kommerziell erhältlichen Absorberbeutelchens entsprechende Menge H₂S entsteht. Die befüllten Beutel wurden in Umbeutel aus einem im wesentlichen gasundurchlässigen Material gegeben und mit unterschiedlichen Absorberbeutelchen bestückt und der Umbeutel verschweißt. Die Prüfmuster wurden kurzzeitgelagert und es wurde die Schwefelwasserstoffmenge, die sich im Zwischenraum zwischen den Umbeuteln und den inneren Beuteln angesammelt hatte, analytisch bestimmt.

Zum Vergleich wurden Beutel entsprechend den vorstehenden Angaben gefüllt und in einen Umbeutel gegeben, allerdings ohne daß Absorber hinzugefügt wurde.

Die Ergebnisse dieser Versuche sind in der folgenden Tabelle zusammengefaßt.

**Tabelle 1**

| | | Absorber | | |
|---|---|---|---|---|
| | Vergleich | Typ 1 | Typ 2 | Typ 3 |
| H₂S-Menge in µg/l | >> 850 (über Nachweisgrenze) | <1 | 10 | 4 |
| | | (unter Nachweisgrenze) | | |

Das Beispiel zeigt, daß mittels kommerziell erhältlicher Absorbertypen die Erfindung erfolgreich durchgeführt werden kann. Die Versuchsergebnisse belegen darüber hinaus deutlich, daß für die üblichen Infusionslösungen durch die Erfindung eine höhere Qualität erreicht werden kann. Dies hängt unmittelbar damit zusammen, daß kaum noch toxisches H₂S in der Lösung verbleibt und bei Zudosierung von Spurenelementlösungen vor der Anwendung keine Ausfällungen von Metallsulfiden entstehen können.

### Beispiel 2

Es wurde untersucht, inwieweit cysteinhaltige Lösungen, die terminal sterilisiert werden, in ihrem H₂S-Gehalt vermindert werden können.

Es wurde eine 1g/l Cystein enthaltende Lösung hergestellt. Die Lösung wurde in Beutel gemäß Beispiel 1 gefüllt und diese zusammen mit Schwefelwasserstoffabsorber (auf Eisenbasis) in praktisch gasundurchlässige Umbeutel verpackt. Diese Beutel wurden im Anschluß daran bei 121°C sterilisiert.

Zum Vergleich wurden Beutel ohne Absorber verpackt.

Nach Kurzzeitlagerung wurde der Schwefelwasserstoffgehalt in den Lösungen bestimmt. Es ergab sich bei der Vergleichslösung ein Schwefelwasserstoffgehalt von 516 µg/l. Im Gegensatz dazu enthielten die erfindungsgemäßen Lösungen lediglich 68 µg/l.

Dieses Beispiel zeigt in deutlicher Weise, wie mittels der Erfindung eine Lösung bereitgestellt wird, die gegenüber dem Stand der Technik das Problem der H₂S-Bildung löst. Der Gehalt an Schwefelwasserstoff ist deutlich vermindert.

## Patentansprüche

1. Behälter mit einem darin befindlichen Produkt, wobei
(A) das Produkt H₂S freisetzt und/oder enthält und
(B) der Behälter für Gase durchlässig ist,
dadurch gekennzeichnet, daß um den Behälter herum ein weiterer, weitgehend gasundurchlässiger Behälter mit einem darin enthaltenen H₂S-Absorber angeordnet ist.

2. Behälter nach Anspruch 1, dadurch gekennzeichnet, daß der Absorber fein gemahlenes Eisen ist.

3. Behälter nach einem der Ansprüche 1 oder 2, dadurch gekennzeichnet, daß das Produkt Aminosäuren enthält.

4. Behälter nach einem der Ansprüche 1 bis 3, dadurch gekennzeichnet, daß das Produkt Tryptophan enthält.

5. Behälter nach einem der Ansprüche 1 bis 4, dadurch gekennzeichnet, daß das Produkt Cystein, N-Acetylcystein, N,N'-Diacetylcystein, cystinhaltige oder sonstige homologe schwefelhaltige Aminosäuren enthält. 6. Verfahren zur Herstellung eines gegen Oxidation geschützten Produktes, bei dem
zunächst zu einem Produkt, das gegen eine Oxidation durch Sauerstoff geschützt werden soll, ein Stoff in einer Menge zugegeben wird, die unter den Verfahrens- und nachfolgenden Gebrauchsbedingungen einen ausreichenden Schutz gegen Oxidation gewährleisten würde, wobei der Stoff und/oder dessen Oxidationsprodukt/e H₂S freisetzen können,
dann das Produkt zusammen mit dem Stoff in einen für Gase durchlässigen Behälter abgefüllt wird und
schließlich der verschlossene Behälter mit einem weiteren, gasundurchlässigen Behälter umgeben wird, in dem ein H₂S-Absorber angeordnet ist,
wobei in dem Verfahren gegebenenfalls eine Hitzesterilisation durchgeführt wird.

## Claims

1. A container with a product contained therein, whereby
(A) the product releases and/or contains H₂S and
(B) the container is permeable to gases,
characterised in that there is around the container a further substantially gas-impervious container with an H₂S absorber contained in it.

2. A container according to claim 1, characterised in that the absorber is finely ground iron.

3. A container according to one of claims 1 or 2, characterised in that the product contains amino acids.

4. A container according to one of claims 1 to 3, characterised in that the product contains tryptophan.

5. A container according to one of claims 1 to 4, characterised in that the product contains cysteine, N-acetyl cysteine, N,N'-diacetyl cysteine, cysteine-containing or other homologous sulphur-containing amino acids.

6. A method of producing a product which is protected against oxidation, in which
there is firstly added to a product which is to be protected against oxidation by oxygen a substance in a quantity which, under the processing and subsequent conditions of use would guarantee adequate protection against oxidation, whereby the substance and/or its oxidation product(s) are capable of releasing H₂S,
whereupon the product together with the substance is filled into a container which is permeable to gases and
finally, the closed container is enclosed in a further container which is impervious to gases and in which there is a H₂S absorber,
whereby sterilisation by heat is possible carried out during the process.

## Revendications

1. Récipient dans lequel se trouve un produit, dans lequel
(A) le produit libère et/ou contient du H₂S, et
(B) le récipient est perméable pour des gaz,
caractérisé en ce qu'autour du récipient, est disposé un récipient supplémentaire essentiellement imperméable aux gaz, qui contient un agent absorbant le H₂S.

2. Récipient selon la revendication 1, caractérisé en ce que l'agent d'absorption est du fer finement broyé.

3. Récipient selon l'une quelconque des revendications 1 ou 2, caractérisé en ce que le produit contient des aminoacides.

4. Récipient selon l'une quelconque des revendications 1 à 3, caractérisé en ce que le produit contient du tryptophane.

5. Récipient selon l'une quelconque des revendications 1 à 4, caractérisé en ce que le produit contient de la cystéine, de la N-acétylcystéine, de la N,N'-diacétylcystéine, des aminoacides contenant de la cystine ou d'autres aminoacides homologues sulfurés.

6. Procédé pour la préparation d'un produit protégé contre l'oxydation, dans lequel
on ajoute d'abord au produit qui doit être protégé contre une oxydation par l'oxygène une substance en une quantité qui garantirait, dans les conditions opératoires et dans les conditions d'utilisation ultérieures, une protection suffisante contre l'oxydation, la substance et/ou son ou ses produits d'oxydation étant à même de libérer du H₂S,
on transvase ensuite le produit conjointement avec la substance dans un récipient perméable pour des gaz, et
on entoure enfin le récipient fermé à l'aide d'un récipient supplémentaire imperméable aux gaz, dans lequel est disposé un agent d'absorption du H₂S,
dans lequel on effectue, au cours du procédé, le cas échéant une stérilisation à la chaleur.
